# EUROPEAN PATENT SPECIFICATION

(11) **EP 1 426 271 B1**
(45) Date of publication and mention of the grant of the patent: **22.06.2005**
(21) Application number: 03027882.4
(22) Date of filing: 04.12.2003
(51) Int. Cl.: B62D 21/15

(54) **Vehicle body frame**
Fahrzeugrahmen
Cadre de véhicule

(30) Priority: 06.12.2002 JP 2002354647
(43) Date of publication of application: 09.06.2004
(73) Proprietor: Honda Motor Co., Ltd., Minato-ku, Tokyo (JP)
(72) Inventor: Kasuga, Tatsuo, Wako-shi, Saitama (JP)
(74) Representative: Herzog, Markus, Dipl.-Phys. Dr.

(56) References cited:
- DE-A- 19 720 640
- PATENT ABSTRACTS OF JAPAN vol. 2002, no. 10, 10 October 2002 (2002-10-10) -& JP 2002 173048 A (NISSAN MOTOR CO LTD), 18 June 2002 (2002-06-18)
- PATENT ABSTRACTS OF JAPAN vol. 016, no. 239 (M-1258), 2 June 1992 (1992-06-02) -& JP 04 050083 A (TOYOTA MOTOR CORP), 19 February 1992 (1992-02-19)
- PATENT ABSTRACTS OF JAPAN vol. 1999, no. 04, 30 April 1999 (1999-04-30) -& JP 11 005564 A (MITSUBISHI MOTORS CORP), 12 January 1999 (1999-01-12)

## Description

### BACKGROUND OF THE INVENTION

The present invention relates to an improved vehicle body frame technique.

In vehicles, vehicle body frames are known in which hollow frame members such as side frames extending longitudinally along a vehicle body are provided (for example, refer to JP-A-11-5564; pages 2 and 3, Figs. 1 and 2). There a side frame such as a front-end side frame extending longitudinally along a vehicle body comprises a hollow frame member which comprises, in turn, an extruded member of aluminum, longitudinal and transverse ribs are integrally formed within the hollow frame member, and the thicknesses of the hollow frame member and the longitudinal and transverse ribs are made to increase progressively from front and rear ends of a vehicle toward the passenger compartment thereof.

When the vehicle collides, crash energybeing then applied to a distal end of the hollow frame, the hollow frame buckles and deforms so that the crash energy so applied can be absorbed.

Incidentally, the shape of the side frame becomes complex in many occasions in consideration of the rigidity of the entirety of the vehicle body frame. However, the side frame in the conventional vehicle body frame is the hollow frame member comprising the extruded member. It is difficult to produce a side frame of a complex configuration through extrusion.

To cope with this, it is conceivable to construct a side frame from a hollow frame member having a complex configuration which is produced by pressing sheet metals into shapes and thereafter welding them together. However, the number of production steps is increased, which leads to an increase in production cost.

On the other hand, it is conceivable to produce a side frame comprising a hollow frame member through casting. Being cast articles, the production costs can be reduced from the mass production effect in the event that hollow frame members are produced in at least a certain quantity that can solve the production cost issue.

However, in producing cast articles, a sufficient control is required so that the quality of a cast article is not caused to vary due to the way in which molten metal flows within a casting mold. Moreover, a certain consideration also has to be taken so that the qualities of cast articles do not vary from article to article so cast. These eventually serve to increase the quality control costs. Thus, there exists a certain improvement in the quality control costs.

DE 197 20 640 A discloses a vehicle body frame in accordance with the preamble of claim 1. There, the ribs are provided in an irregular zig-zag arrangement.

### SUMMARY OF THE INVENTION

Then, an object of the invention is to provide a technique for absorbing crash energy in a stable fashion without increasing the quality control costs for cast articles in a case where cast products are used for hollow frame members such as side frames extending longitudinally along the vehicle body.

With a view to attaining the object, according to a first aspect of the invention, there is provided a vehicle body frame characterized in that cast hollow frame members such as side frames extending longitudinally along a vehicle body are provided, each of the cast hollow frame members having a plurality of ribs provided at certain regular intervals on an inner circumferential surface of the hollow frame member so as to partition longitudinally the interior thereof at the certain regular intervals.

By providing the plurality of ribs at the certain regular intervals on the inner circumferential surface of the cast hollow frame member such as the side frame so as to partition longitudinally the interior of the hollow frame member, it is possible to provide portions where the buckling strength is increased, that is, node portions at the certain regular intervals in the longitudinal direction in the cast hollow frame member. As is needless to mention, the buckling strength at the node portions is larger than that at the other portions. For example, even if the quality of the cast hollow frame member slightlyvaries (thephysicalproperties thereof slightly vary), the buckling and deforming of the hollow frame member is ensured at the portions thereof where no node is provided when crash energy is applied to an end of the hollow frame member. Due to this, the hollow frame member is allowed to buckle and deform at the certain regular intervals subsequently from the end where the crash energy is applied to thereby absorb the crash energy so applied stably and sufficiently.

Consequently, the crash energy can be absorbed sufficiently in the stable fashion by the cast hollow frame member without increasing the quality control costs for the cast hollow frame member so produced.

According to a second aspect of the invention, there is provided a vehicle body frame as set forth in the first aspect of the invention, wherein the thickness of the cast hollow frame member at portions where the plurality of ribs are provided is set larger than the thickness thereof at other portions.

By setting the thickness of the portions of the cast hollow frame member where the plurality of ribs are provided larger than the thickness of the other portions thereof, the buckling strength at the portions where the ribs are provided (portions where the buckling strength is increased), that is, the node portions. Consequently, the crash energy can be absorbed stably at the portions of the cast hollow frame member where no node is provided.

According to a third aspect of the invention, there is provided a vehicle body frame as set forth in the first or second aspect of the invention, wherein the thickness of the cast hollow frame member is set so as to increase gradually from a one end of the hollow frame member where crash energy is applied toward the other end thereof.

By setting the thickness of the cast hollow frame member so as to increase gradually from the end where the crash energy is applied toward the other end, it is possible to increase gradually the buckling strength from the end toward the other end. Consequently, the hollow frame member is allowed to buckle and deform sequentially from the end toward to the other end in a more ensured fashion to thereby absorb the crash energy sufficiently in a more stable fashion.

According to a fourth aspect of the invention, there is provided a vehicle body frame as set forth in the first, second or third aspect of the invention, wherein the dimensions of a cross section of the cast hollow frame member are set so as to increase gradually from an end of the hollow frame member where crash energy is applied to the other end thereof.

By setting the dimensions of the cross section of the cast hollow frame member so as to increase gradually from the end of the hollow frame member where crash energy is applied to the other end thereof, it is possible to increase gradually the buckling strength from the end toward the other end. Consequently, the hollow frame member is allowed to buckle and deform sequentially from the end toward to the other end in a more ensured fashion to thereby absorb the crash energy sufficiently in a more stable fashion.

### BRIEF DESCRIPTION OF THE DRAWINGS

Fig. 1 is a perspective view of a vehicle according to the invention.
Figs. 2A and 2B are diagrams illustrating the construction of a side frame (a hollow frame member) according to the invention.
Figs. 3A and 3B are explanatory diagrams explaining an energy absorption through the plastic deformation of a thin sheet material boxed member.
Figs. 4A and 4B are explanatory diagrams (Part 1) explaining the energy absorbing characteristics of a vehicle body.
Figs. 5A to 5C are explanatory diagrams (Part 2) explaining the energy absorbing characteristics of the vehicle body.
Figs. 6A to 6D are diagrams illustrating the function of the hollow frame member according to the invention.
Figs. 7A and 7B are diagrams illustrating the construction of a hollow frame member (a first modified example) according to the invention.
Figs. 8A and 8B are diagrams illustrating the construction of a hollow frame member (a second modified example) according to the invention.
Figs. 9Aand 9B are diagrams illustrating the construction of a hollow frame member (a third modified example) according to the invention.
Fig. 10 is a diagram illustrating the construction of a hollow frame member (a fourth modified example) according to the invention.
Fig. 11 is a diagram illustrating the construction of a hollow frame member (a fifth modified example) according to the invention.

### DETAILED DESCRIPTION OF THE PREFERRED EMBODIMENTS

An embodiment of the invention will be described based on the accompanying drawings. Note that terms such as "front", "rear", "left", "right", "upper" and "lower" indicate directions as viewed from the perspective of the driver. In addition, the drawings are viewed in directions in which reference numerals are oriented.

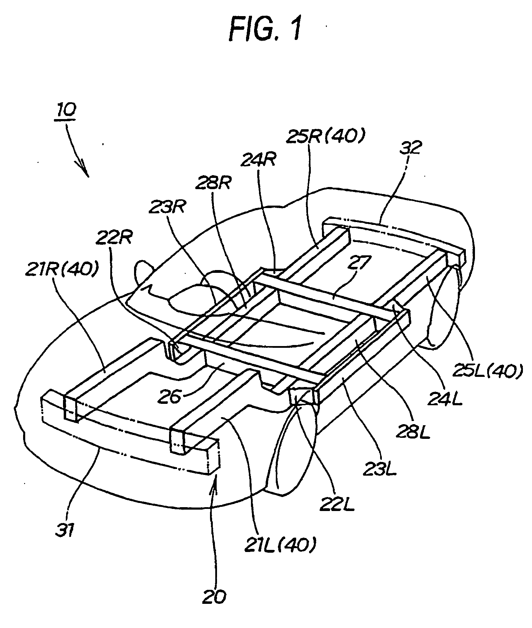

Fig. 1 is a perspective view of a vehicle according to the invention. A vehicle body frame 20 of a vehicle 10 such as an automobile mainly includes left and right front-end side frames 21L, 21R which extend from a front end portion of a vehicle body toward a rear thereof, left and right side outriggers 22L, 22R which are joined to rear ends of the front-end side frames 21L, 21R, left and right side sills 23L, 23R which are joined to rear portions of the side outriggers 22L, 22R in such a manner as to extend rearward, left and right rear-end side frames 25L, 25R which are joined to rear ends of the side sills 23L, 23R via left and right connecting members 24L, 24R in such a manner as to extend rearward, a front cross member 26 which is provided to extend between rear ends of the left and right front-end side frames 21L, 21R, a rear cross member 27 provided to extend between rear ends of the left and right rear-end side frames 25L, 25R, and left and right floor frames 28L, 28R.

Reference numeral 31 denotes a front bumper and reference numeral 32 denotes a rear bumper.

The left and right front-end side frames 21L, 21R and the left and right rear-end side frames 25L, 25R are referred to, as a whole, as a side frame 40 provided on the vehicle body frame 20 in such a manner as to extend longitudinally. The side frame 40 will be described in detail below.

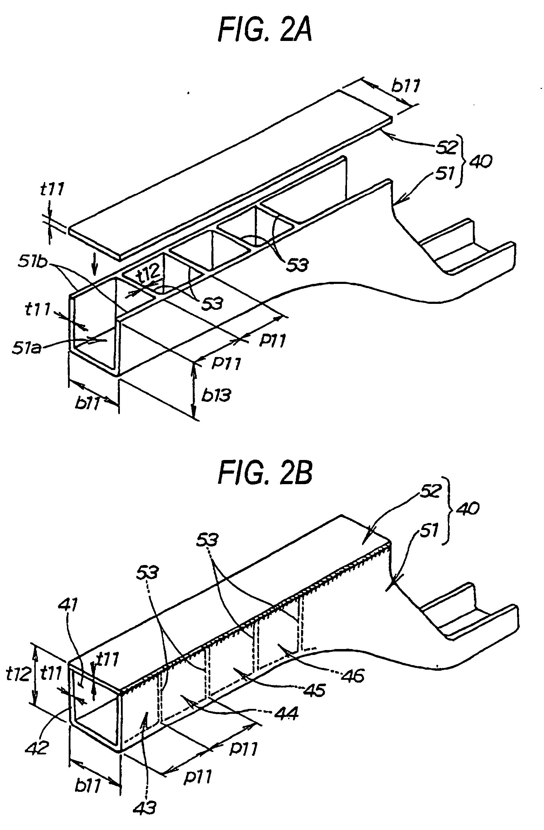

Figs. 2A, 2B are diagrams showing the construction of the side frame (a hollow frame member) according to the invention, in which Fig. 2A is a perspective view showing the construction of the side frame 40 which is not yet completed properly, and Fig. 2B is a perspective view showing the construction of the side frame 40 which is completed properly.

The side frame 40 is a hollow frame member comprising a casting alloy or steel. Hereinafter, the side frame 40 is referred to a "hollow frame member 40" from time to time depending on descriptions to be made.

To be specific, the hollow frame member 40 is a combined structure including a first frame half 51 comprising a unit having a substantially U-shaped cross section (a square-grooved constituent structure) and a second frame half 52 which is formed substantially into a flat plate, as shown in Fig. 2A.

The first frame half 51 has a width of b11 and a height of b13. The width of the second frame half 52 is b11. The thicknesses of the first frame half 51 and the second frame half 52 are t11.

The first frame half 51 is such that a plurality of ribs 53 ... (... denotes plurality and this applies to the remaining part of the detailed description of the invention) are integrally formed at certain regular intervals p11 in a longitudinal direction in a groove 51a which extends in the longitudinal direction therein. These ribs 53 ... are flat plates arranged so as to partition the interior of the first frame half 51 at the certain regular intervals in the longitudinal direction. The ribs 53 ... are provided so as to extend as high as open edges 51b, 51b of the substantially U-shaped cross section to thereby totally close the groove 51a of the first frame half 51 in the longitudinal direction. The thickness of the ribs 53 ... is t12 and is the same as the thickness of the first frame half 51, which is t11.

A hollow frame member 40 as shown in Fig. 2B can be constructed by placing the second frame half 52 on the open edges 51b, 51b of the first frame half 51 and jointing them together through such as welding. The hollow frame member 40 so constructed constitutes an elongate structure having a closed cross section which is formed into a square or rectangular cross section (hereinafter, both the cross sections being referred to as a "rectangular cross section" in common). The dimensions of the structure having the closed cross section is such that the length of one side is b11 and the length of the other side which is normal to the one side is b12. The length of the other side is a sum of the height b13 of the first frame half 51 and the thickness of the second frame half 52.

The plurality of ribs 53 ... can be provided at the certain regular intervals p11 on an inner circumferential surface 41 of the cast hollow frame member 40 so as to partition the interior of the hollow frame member 40 at the certain regular intervals p11 in the longitudinal direction. In the cast hollow frame member 40, respective blocks which are partitioned by the ribs 53 ... are referred to a first block 43, a second block 44, a third block 45, a fourth block 46, ... sequentially in that order from one end 42 (a distal end 42) toward the other end (a compartment side which is illustrated as being located on the right-hand side of the drawing).

Note that the second frame half 52 which is placed on end faces of the ribs 53 ... may be jointed thereto further through spot welding.

Next, the size of the interval p11 between the plurality of ribs 53 ... provided on the hollow frame member 40 will be described.

The following reports Nos. 1 and 2 are known as studies on crash energy absorbing characteristics in which crash energy generated when the vehicle is subjected to a front-end or rear-end collision is absorbed through the plastic deformation of the left and right side frames which extend longitudinally, that is, the front-end side frames or the rear-end side frames.

Report No. 1 .... by Masatoshi Yamaya et al., entitled "Energy Absorption through Plastic Deformation of Thin Sheet Material Boxed Member" on pages 124 to 130 in the first issue of the eighth volume of Mitsubishi Heavy Industries Technical Report, Mitsubishi Heavy Industries Inc., issued in January, 1971

Report No. 2...by Noriyuki Aya et al., entitled "Energy Absorbing Characteristics of Vehicle Bodies (First Issue) " on pages 60 to 66 in a collection of reports prepared and issued as the seventh issue of 1974 by Automobile Technology Association.

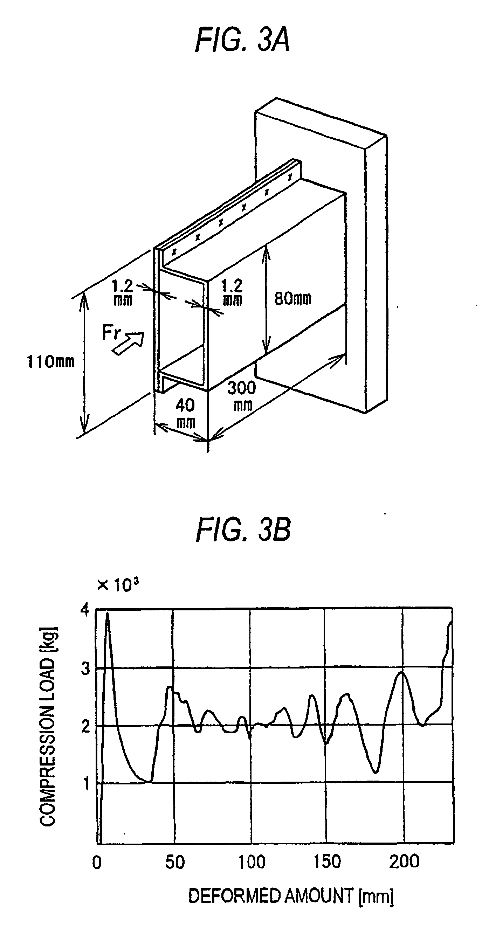

Figs. 3A, 3B are explanatory diagrams which describe energy absorption through the plastic deformation of a thin sheet material boxed member, and are shown herein to illustrate in a combined fashion what are shown in Figs. 1 to 3 and Fig. 5 in the aforesaid report No. 1.

Fig. 3A shows a test sample used for a static load compression test. The test sample is a steel product formed into a structure having a rectangular closed cross section by closing an opening in a top-hat member with a flat plate, the structure being 300mm long and the closed cross section thereof extending uniformly along the full length thereof. The respective dimensions of the test sample are such that the width is 40mm, the height 80mm, the overall height of the top-had member 110mm, and the thickness of the top-hat member and the flat plate 1.2mm. Namely, the test sample is a structure having a rectangular closed cross section which is 40mm wide and 80mm high.

The results of a static load compression test in which a compression load Fr is longitudinally applied to the test sample are illustrated in Fig. 3B.

Fig. 3B is a graph illustrating the results of a static load compression test on the test sample described in Fig. 3A, in which graph the compression load applied the test sample is represented by the axis of ordinate while the deformed amount of the test sample is represented by the axis of abscissa.

According to Fig. 3B, it is recognized that when compressing the test sample which is 300mm long, the compression load is generally stable until the deformed amount became around 150mm, when the deformed amount exceeded around 150mm, the compression load became unstable, and when the deformed amount exceeded around 200mm, the compression load increased drastically.

Thus, when the test sample buckled and deformed until the length of the test sample became a half of the overall length thereof, since the compression load to effect the deformation rose drastically, and the continuation of deformation became difficult. This is true when considering partial buckling and deformation of the test sample in the longitudinal direction. In general, in the event that the test sample buckles and deforms in the longitudinal direction, it is known that the test sample buckles and deforms in such a manner as to form waveforms (bellows) substantially every certain pitch in the longitudinal direction. Let's assume that this certain pitch is referred to as a buckling mode pitch p". It can be conceived that there is a note for deformation every buckling mode pitch p.

According to the results of the test, when also considering the buckling and deformation of the test sample occurring every buckling mode pitch p, when the test sample deforms to in the order of a half the buckling mode pitch p, the continuation of deformation will be difficult.

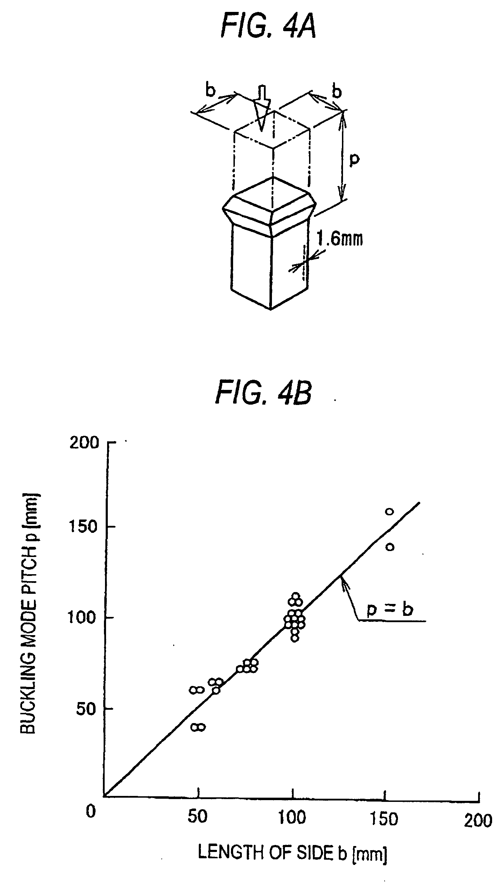

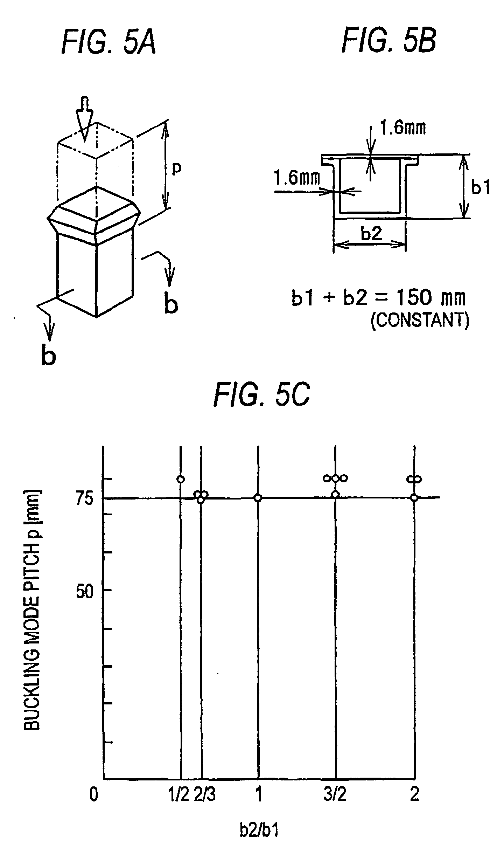

Incidentally, the buckling mode pitch p is known to vary in accordance with the size of the cross section of a test sample. This will be described based on Figs. 4 and 5.

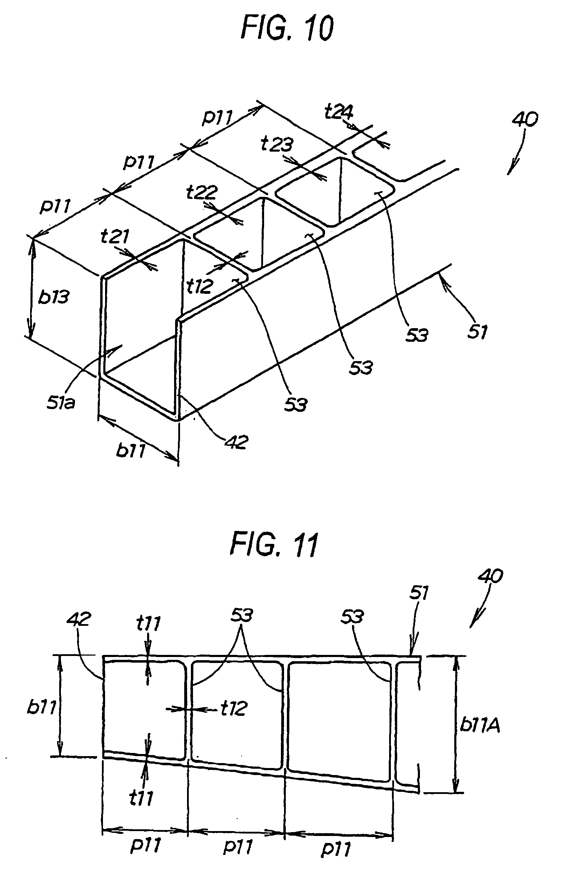

Figs. 4A, 4B are explanatory diagrams (Part 1) which describe the energy absorption characteristics of a vehicle body, and are shown herein to illustrate what is shown in Fig. 11 in the aforesaid report No. 2.

Fig. 4A illustrates a test sample used a static load compression test. The test sample is a structure having a uniform square cross section in which the length of a side is set to b and the thickness thereof is 1.6mm. Variation in buckling mode pitch p is illustrated in Fig. 4B which resulted when a longitudinal compression is applied to the test sample with the length of the side thereof being changed.

Fig. 4B is a graph illustrating the results of a static load compression test performed on the test sample illustrated in Fig. 4A, with the length b of the side of the test sample being represented by the axis of abscissa and variation in buckling mode pitch p being represented by the axis of ordinate.

According to Fig. 4B, it is recognized that the variation in buckling mode pitch p is in proportion to the variation in the length b of the side to thereby establish p=b.

Figs. 5A to 5C are explanatory diagrams (Part 2) which explain the energy absorbing characteristics of a vehicle body, and are shown herein to illustrate what is shown in Fig. 13 in the aforesaid report No. 2.

Fig. 5A shows a test sample used for a static load compression test, and Fig. 5B shows a cross-sectional construction taken along the line b-b in Fig. 5A. The test sample is a structure having a uniform rectangular cross section in which the length of a side is set to b1, the length of a side which is normal to the side having the length b1 is set to b2, and the thickness thereof is 1.6mm. Fig. 5C illustrates the variation in the buckling mode pitch p resulting when a static load compression test is carried out on the test sample by applying a longitudinal compression load to the test sample with a sum of the length b1 of the one side and the length b2 of the other side thereof being set so as to become 150mm (constant), and a ratio of the length b 1 of the one side to the length b2 of the other side being caused to vary.

Fig. 5C is a graph illustrating the results of the static load compression test carried out on the test sample shown in Fig. 5A, with the ratio of the length b2 of the other side relative to the length b1 of the one side of the test sample being represented by the axis of abscissa and the variation inbuckling mode pitch p being represented by the axis of ordinate.

According to Fig. 5C, it is recognized that with the sum (b1+b2) of b1 and b2 being constant, even if the ratio of b2 relative to b1 changes, the buckling mode pitch p remains constant. Namely, in case the circumferential length of the rectangular cross section and the circumferential length of the square cross section are equal, it can be said that loads generated become equal.

Thus, in the structure having the rectangular cross section, the buckling mode pitch p is determined by an average value of the length of the shorter side and the length of the longer side. Consequently, the structure having the rectangular cross sectionmaybe considered as a structure having a square cross section which has a circumferential length equal to that of the structure having the rectangular cross section.

As is clear from what is described heretofore, it is more preferable to set the size of the interval p11 between the plurality of ribs 53 ... shown in Fig. 2 the same or substantially the same as the buckling mode pitch p. The reason for this idea is as follows.

The hollow frame member 40 shown in Fig. 2B will be considered based on the descriptions made with respect to Figs. 3 to 5. Here, let's consider a case where no ribs 53 ... are provided on the hollow frame member 40. In the event that the hollow frame member 40 buckles and deforms in the longitudinal direction, the hollow frame member 40 deforms in a bellows-like fashion in the longitudinal direction every buckling pitch p, this leading to an idea that a "deformation node" exists every buckling mode pitch p. In case the occurrence of buckling and deformation of the hollow frame member 40 between these "deformation nodes" can be ensured, this results in a stable absorption of crash energy.

Then, it is determined that the plurality of ribs 53 ... are provided at the certain regular intervals p11 on the inner circumferential surface 41 of the hollow frame member 40 so as to partition longitudinally the interior of the hollow frame member 40 at the certain regular intervals p11. Furthermore, the interval p11 between the ribs 53 ... is set so as to be the same or substantially the same as the aforesaid buckling mode pitch p.

Since the portions of the hollow frame member 40 where the ribs 53 ... are provided are reinforced by the ribs 53 ... so provided, these portions may be referred to as portions where the buckling strength is increased or the so-called node portions.

Note that the "buckling strength" means a compression strength (a crushing strength) against a compression load applied longitudinally to the hollow frame member 40 when crash energy is applied to the distal end thereof.

The words "buckles and deforms" mean the corruption of the hollow frame member after the member is caused to deform plastically by virtue of the aforesaid compression load.

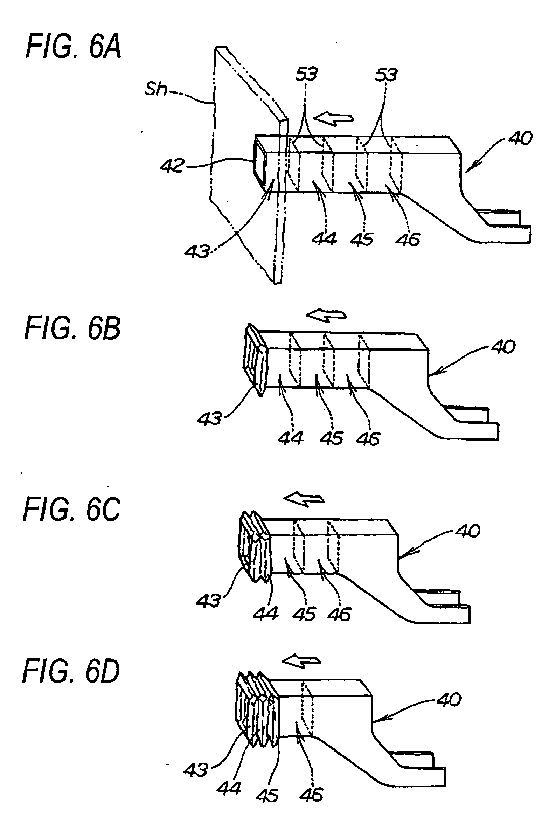

Next, the function of the hollow frame member 40 constructed as is described heretofore will be described based on Figs. 6A to 6D.

Figs. 6A to 6D are diagrams illustrating the function of the hollow frame member according to the invention and describe as an example a case where a vehicle collides with an obstacle Sh.

Fig. 6A illustrates a point in time when crash energy starts to be applied to an end 42 of the hollow frame member of the invention as a result of collision of the vehicle against the obstacle Sh. Hereinafter, in the following description with respect to Fig. 6B and the remaining drawings, the obstacle Sh will be omitted.

Fig. 6B illustrates that the first block 43 at the end 42 of the hollow frame member 40 is deformed plastically in a bellows-like fashion by virtue of the crash energy so applied.

Fig. 6C illustrates that additionally, the second block 44 of the hollow frame member is deformed plastically in the bellows-like fashion due to the crash energy so applied.

Fig. 6D illustrates that furthermore, the second block 45 of the hollow frame member is deformed plastically in the bellows-like fashion due to the crash energy so applied.

Thus, the hollow frame member 40 buckles and deforms at the certain regular intervals sequentially from the end 42 thereof so that the crash energy can be absorbed stably and sufficiently.

As is clear from what is described heretofore, the vehicle frame of invention is characterized in that the cast hollow frame member 40 such as the side frame which extends longitudinally along the vehicle body is provided, the cast hollow frame member 40 having the plurality of ribs 53 ... provided at the certain regular intervals p11 on the inner circumferential surface 41 of the hollow frame member 40 so as to partition longitudinally the interior thereof at the certain regular intervals p11.

According to the construction, the portions where the buckling strength is increased or the node portions can be provided at the certain regular intervals p11 in the longitudinal direction on the cast hollow frame member 40. As is needless to mention, the buckling strength at the node portions is larger than those at the other portions. For example, even if the quality of the cast hollow frame member 40 varies slightly (the physical properties thereof vary slightly), the portions of the hollow frame member 40 where no node is provided buckle and deform in an ensured fashion when crash energy is applied to the hollow frame member 40 from the one end 42 thereof. Due to this, the hollow frame member 40 buckles and deforms at the certain regular intervals sequentially from the one end 42 thereof so that the crash energy can be absorbed stably and sufficiently.

Consequently, it becomes possible to allow the crash energy to be absorbed stably and sufficiently by the cast hollow frame member 40 without increasing the quality control costs for the cast hollow frame member 40. Moreover, being a cast article, a hollow frame member having a complex configuration can easily be produced, and the production costs can be reduced from the mass production effect in the event that hollow frame members are produced in at least a certain quantity that can solve the production cost issue.

Note that the second frame half 52 which has a relatively simple configuration may be produced by pressing sheet materials into shapes or be extruded from an extrusion material.

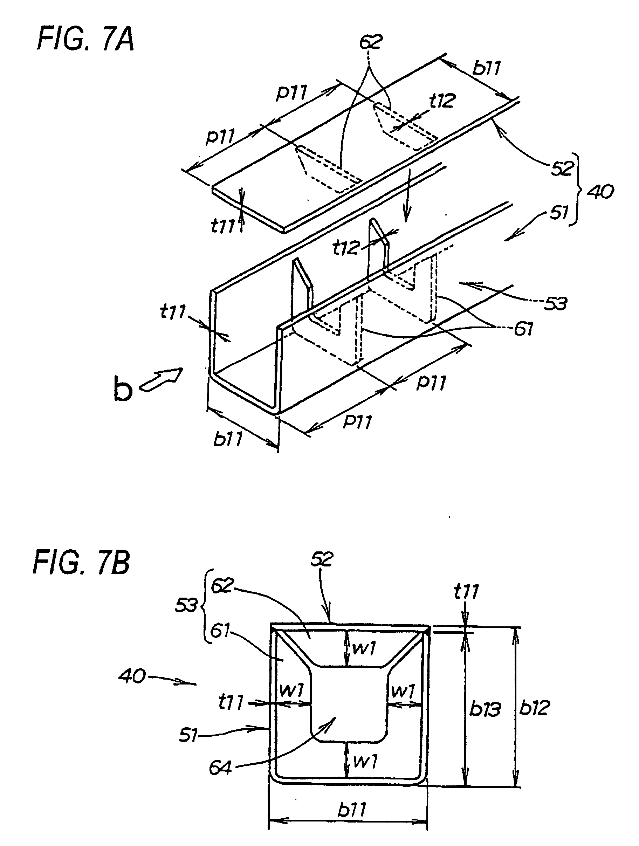

Next, referring to Figs. 7 to 11, modified examples to the hollow frame member 40 that is described heretofore will be described. Note that like reference numbers are given to like constituent members to those described by reference to Figs. 1 to 6, the description thereof being therefore omitted.

Figs. 7A, 7B are diagrams illustrating the construction of a hollow frame member (a first modified example) according to the invention. Fig. 7A corresponds to Fig. 2A and illustrates a hollow frame member 40, and Fig. 7B is a view of the hollow frame member as viewed in a direction indicated by an arrow b in Fig. 7A.

The hollow frame member 40 according to the first modified example is characterized in that respective ribs 53 ... are divided into two parts. The rib 53 includes a first rib half 61 which is integrally formed on the interior of a first frame half 51 and a second rib half 62 which is integrally formed on an inner circumferential surface of a second frame hal 52.

The first and second rib halves 61, 62 are a batten-like member having a certain width w1 and a thickness t12. Due to this, the hollow frame member 40 is caused to have a hole 64 in a central portion thereof. The interior of the cast hollow frame member 40 can be partitioned at certain regular intervals p11 in the longitudinal direction by these ribs 53...

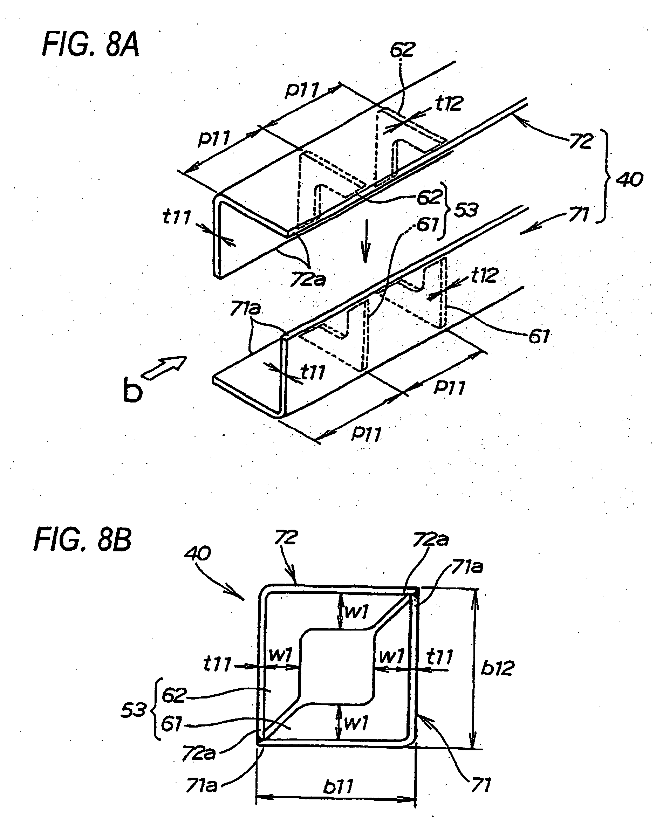

Figs. 8A, 8B are diagrams illustrating the construction of a hollow frame member (a second modified example) according to the invention, which is a further modified example to the first modified example shown in Figs. 7A, 7B. Fig. 8A corresponds to Fig. 7A and illustrates a hollow frame member 40, and Fig. 8B is a view of the hollow frame member as viewed in a direction indicated by an arrow b in Fig. 8A.

As shown in Fig. 8A, the hollow frame member 40 according to the second modified example includes a first frame half 71 comprising a structure having a substantially L-shaped cross section and a second frame half 72 comprising a structure having a substantially L-shaped cross section and can be constructed into a rectangular cross section as shown in Fig. 8B by allowing distal edge portions 71a, 72a to overlap each other and then welding them together.

A rib 53 of the hollow frame member of the second modified example includes a first rib half 61 which is integrally formed on the interior of the first frame half 71 and a second rib half 62 which is integrally formed on an inner circumferential surface of the second frame half 72. As with the first modified example, the first and second rib halves 61, 62 are a batten-like member having a certain width w1 and a thickness t12. The interior of the cast hollow frame member 40 can be partitioned at certain regular intervals p11 in the longitudinal direction by these ribs 53...

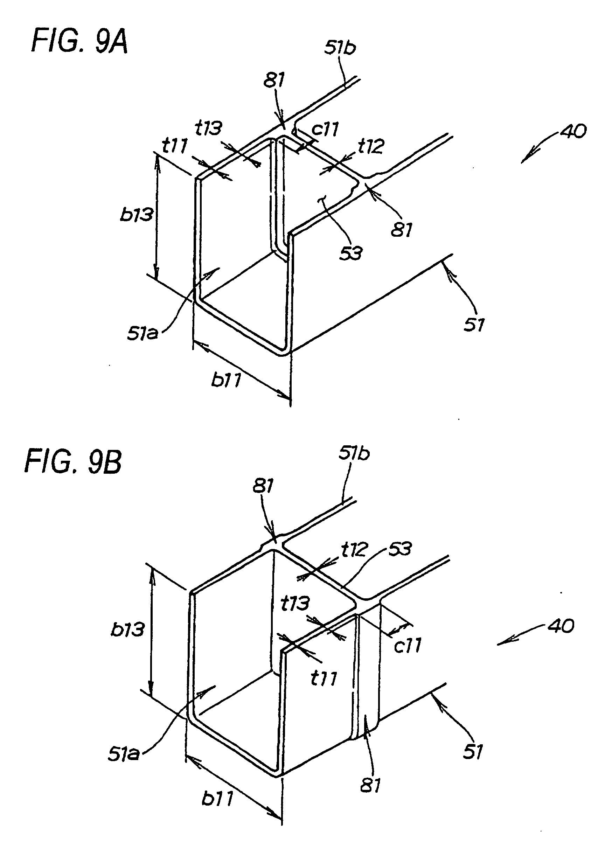

Figs. 9A, 9B are diagrams illustrating the construction of a hollow frame member (a third modified example) according to the invention, the hollow frame member being illustrated in such a manner as to correspond to the first frame half 51 shown in Fig. 2A.

Fig. 9A illustrates that the thickness t13 of portions 81 of a first frame half 51 where ribs 53 ... are provided is increased toward a groove 51a formed in the first frame half 51. Note that the length of the portions where the thickness t13 is increased is c11.

Thus, the hollow frame member 40 according to the third modified example is characterized in that the thickness t13 of the portions where the plurality of ribs 53 ... are provided (the thickness of the sheet material thereat) is set thicker than the thickness of the other portions (the thickness of the sheet material thereat). By this construction, the buckling strength of the portions where the ribs 53 ... are provided, or the so-called node portions can be increased further. Consequently, the crash energy can be absorbed in a stable fashion by the cast hollow frame member 40.

Fig. 10 is a diagram illustrating the construction of a hollow frame member (a fourth modified example) according to the invention, and the hollow frame member being illustrated in such a manner as to correspond to the first frame half 51 shown in Fig. 2A. This drawing illustrates that the thickness of the hollow frame member 40 is set so as to increase gradually from one end 42 of the hollow frame member 40 where crash energy is appl ied toward the other end (a right-hand side of the drawing) . To be specific, the thickness of the first frame half 51 (the thickness of the sheet material) is set so as to increase gradually from the one end 42 toward the other end at respective portions between the ribs 53, 53 in such a manner that the thickness increases from t21 to t22, t23 and t24 (t21<t22<t23<t24).

As a result, the buckling strength canbe caused to increase gradually from the one end 42 toward the other end. Consequently, the hollow frame member 40 is allowed to buckle and deform sequentially from the one end 42 toward the other end in a more secured fashion so that the crash energy can be absorbed sufficiently in a more stable fashion.

Fig. 11 is a plan view of a hollow member (a fifth modified example) according to the invention, the hollow frame member being illustrated in such a manner as to correspond to the first frame half 51 shown in Fig. 2A. This diagram illustrates that the dimensions of the cross section of the hollow frame member 40 is set so as to increase gradually from one end 42 where crash energy is applied toward the other end (a right-hand side of the drawing). To be specific, the length of a side of the hollow frame member 40 is set to b11 at the one end 42 and at the other end to b11A which is larger than b11 (b11<b11A). Thus, the hollow frame member 40 is caused to increase gradually widthwise from the one end 42 toward the other end.

As a result, the buckling strength canbe caused to increase gradually from the one end 42 toward the other end. Consequently, the hollow frame member 40 is allowed to buckle and deform sequentially from the one end 42 toward the other end in a more secured fashion so that the crash energy can be absorbed sufficiently in a more stable fashion.

Note that in as embodiments of the invention, more preferred functions and advantages can be exhibited by suitably combining the construction of the embodiment shown in Figs. 1 to 6 and the constructions of the modified examples shown in Figs. 7 to 11. For example, the construction of the third modified example shown in Figs. 9A, 9B, the construction of the fourthmodified example shown in Fig. 10 and the construction of the fifth modified example shown in Fig. 11 can be combined together.

The invention provides the following advantages by the constructions that are described heretofore.

According to the first aspect of the invention, by providing the plurality of ribs at the certain regular intervals on the inner circumferential surface of the cast hollow frame member such as the side frame so as to partition longitudinally the interior of the hollow frame member, it is possible to provide portions where the buckling strength is increased, that is, node portions at the certain regular intervals in the longitudinal direction in the cast hollow frame member. As is needless to mention, the buckling strength at the node portions is larger than that at the otherportions. For example, even if the quality of the cast hollow frame member slightly varies (the physical properties thereof slightly vary), the buckling and deforming of the hollow frame member is ensured at the portions thereof where no node is provided when crash energy is applied to an end of the hollow frame member. Due to this, the hollow frame member is allowed to buckle and deform at the certain regular intervals subsequently from the end where the crash energy is applied to thereby absorb the crash energy so applied stably and sufficiently.

Consequently, the crash energy can be absorbed sufficiently in the stable fashion by the cast hollow frame member without increasing the quality control costs for the cast hollow frame member so produced.

According to the second aspect of the invention, by setting the thickness of the portions of the cast hollow frame member where the plurality of ribs are provided larger than the thickness of the other portions thereof, the buckling strength at the portions where the ribs are provided (portions where the buckling strength is increased), that is, the node portions. Consequently, the crash energy can be absorbed stably by the cast hollow frame member.

According to the third aspect of the invention, by setting the thickness of the cast hollow frame member so as to increase gradually from the end where the crash energy is applied toward the other end, it is possible to increase gradually the buckling strength from the end toward the other end. Consequently, the hollow frame member is allowed to buckle and deform sequentially from the end toward to the other end in a more ensured fashion to thereby absorb the crash energy sufficiently in a more stable fashion.

According to the fourth aspect of the invention, by setting the dimensions of the cross section of the cast hollow frame member so as to increase gradually from the end of the hollow frame member where crash energy is applied to the other end thereof, it is possible to increase gradually the buckling strength from the end toward the other end. Consequently, the hollow frame member is allowed to buckle and deform sequentially from the end toward to the other end in a more ensured fashion to thereby absorb the crash energy sufficiently in a more stable fashion.

A vehicle body frame is such as to be provided with cast hollow frame members 40 such as side frames extending longitudinally along a vehicle body. A plurality of ribs 53 ... are provided at certain regular intervals p11 on an inner circumferential surface 41 of the cast hollow frame member so as to partition the interior of the hollow frame member longitudinally at the certain regular intervals p11. The hollow frame member buckles and deforms subsequently from one end 42 thereof at the certain regular intervals so that the crash energy can be absorbed stably and sufficiently.

## Claims

1. A vehicle body frame comprising:
cast hollow frame members (40) such as side frames extending longitudinally along a vehicle body, and
a plurality of ribs (53) provided on an inner circumferential surface (41) of each of the cast hollow frame members (40),
**characterized in that** the plurality of ribs (53) are provided so as to partition longitudinally the interior of the cast hollow frame members (40) at certain regular intervals (p11).

2. The vehicle body frame as set forth in claim 1, wherein the thickness of the cast hollow frame member (40) at portions where the plurality of ribs (53) are provided is set larger than the thickness thereof at other portions.

3. The vehicle body frame as set forth in claim 1, wherein the thickness of the cast hollow frame member (40) is set so as to increase gradually from an end (42) of the hollow frame member (40) where crash energy is applied toward the other end thereof.

4. The vehicle body frame as set forth in claim 1, wherein the dimensions of a cross section of the cast hollow frame member (40) are set so as to increase gradually from an end (42) of the hollow frame member (40) where crash energy is applied to the other end thereof.

## Patentansprüche

1. Fahrzeugkörperrahmen umfassend:
gegossene hohle Rahmenelemente (40), wie etwa Seitenrahmen, die sich längs entlang einem Fahrzeugkörper erstrecken, und
eine Mehrzahl von Rippen (53), die an einer Innenumfangsfläche (41) jedes der gegossenen hohlen Rahmenelemente (40) vorgesehen sind,
**dadurch gekennzeichnet, dass** die Mehrzahl von Rippen (53) so vorgesehen sind, dass sie den Innenraum der gegossenen hohlen Rahmenelemente (40) an bestimmten regelmäßigen Intervallen (p11) längs unterteilen.

2. Fahrzeugkörperrahmen nach Anspruch 1,
worin die Dicke des gegossenen hohlen Rahmenelements (40) an jenen Abschnitten, wo die Mehrzahl von Rippen (53) vorgesehen sind, größer eingestellt ist als dessen Dicke an anderen Abschnitten.

3. Fahrzeugkörperrahmen nach Anspruch 1,
worin die Dicke des gegossenen hohlen Rahmenelements (40) so eingestellt ist, dass sie von einem Ende (42) des hohlen Rahmenelements (40), wo die Aufprallenergie einwirkt, zu dessen anderem Ende hin allmählich zunimmt.

4. Fahrzeugkörperrahmen nach Anspruch 1,
worin die Querschnittsdimensionen des gegossenen hohlen Rahmenelements (40) so eingestellt sind, dass sie von einem Ende (42) des hohlen Rahmenelements (40), wo die Aufprallenergie einwirkt, zu dessen anderem Ende hin allmählich zunehmen.

## Revendications

1. Châssis de carrosserie de véhicule comportant :
des éléments de châssis creux coulés (40) tels que des châssis latéraux s'étendant longitudinalement le long d'une carrosserie de véhicule, et
une pluralité de nervures (53) agencées sur une surface circonférentielle intérieure (41) de chacun des éléments de châssis creux coulés (40),
**caractérisé en ce que** la pluralité de nervures (53) est agencée de manière à séparer longitudinalement l'intérieur des éléments de châssis creux coulés (40) à certains intervalles réguliers (p11).

2. Châssis de carrosserie de véhicule selon la revendication 1, dans lequel l'épaisseur de l'élément de châssis creux coulé (40) sur des parties où la pluralité de nervures (53) est agencée est établie plus grande que son épaisseur sur les autres parties.

3. Châssis de carrosserie de véhicule selon la revendication 1, dans lequel l'épaisseur de l'élément de châssis creux coulé (40) est établie de manière à augmenter progressivement à partir d'une extrémité (42) de l'élément de châssis creux (40) où une énergie d'accident est appliquée en direction de l'autre extrémité de celui-ci.

4. Châssis de carrosserie de véhicule selon la revendication 1, dans lequel les dimensions d'une section transversale de l'élément de châssis creux coulé (40) sont établies de manière à augmenter progressivement à partir d'une extrémité (42) de l'élément de châssis creux (40) où une énergie d'accident est appliquée en direction de l'autre extrémité de celui-ci.
